# EUROPEAN PATENT SPECIFICATION

(11) **EP 4 424 006 B1**
(45) Date of publication and mention of the grant of the patent: **02.12.2026**
(21) Application number: 22803327.0
(22) Date of filing: 25.10.2022
(51) Int. Cl.: H04N 1/60

(54) **PHYSICAL-SAMPLE-BASED COLOR PROFILING**
AUF PHYSIKALISCHEN PROBEN BASIERENDE FARBPROFILIERUNG
PROFILAGE DES COULEURS BASÉ SUR DES ÉCHANTILLONS PHYSIQUES

(30) Priority: 25.10.2021 US 202163271697 P; 20.07.2022 EP 22185891
(43) Date of publication of application: 04.09.2024
(60) Divisional application: 26203351.7 / 4 832 476
(73) Proprietor: Esko-Graphics Imaging GmbH, 25524 Itzehoe (DE); Esko Software BV, 9051 Gent (BE)
(72) Inventor: GOOSSENS, Rian, 9051 Gent (BE)
(74) Representative: Müller-Boré & Partner Patentanwälte PartG mbB
(86) International application number: PCT/EP2022/079784
(87) International publication number: WO 2023/072933

(56) References cited:
- US-A1- 2004 184 658
- US-A1- 2008 111 998
- US-A1- 2021 133 522
- ASTON ZHANG ET AL: "Dive into Deep Learning", ARXIV.ORG, CORNELL UNIVERSITY LIBRARY, 201 OLIN LIBRARY CORNELL UNIVERSITY ITHACA, NY 14853, 21 June 2021 (2021-06-21), XP091005704
- ZHAO LEI: "Study on Printer Characterization Based on BP Neural Network", 1 November 2015 (2015-11-01), Paris, France, pages 1693 - 1696, XP055982657, ISBN: 978-94-625-2123-0, Retrieved from the Internet <URL:https://www.semanticscholar.org/paper/Study-on-Printer-Characterization-Based-on-BP-Zhao/02e15f7f7f5de8ee8a299ee4ba5abfc9976677ef> [retrieved on 20221118], DOI: https://doi.org/10.2991/itms-15.2015.412

## Description

### CROSS-REFERENCE TO RELATED APPLICATIONS

This application claims priority to U.S. Provisional Application Ser. No. 63/271,697, filed October 25, 2021, titled SYSTEM AND METHOD FOR DEFINING A PRINT FILE, and to European Patent Application Ser. No. EP22185891, filed July 20, 2022, titled PHYSICAL-SAMPLE-BASED COLOR PROFILING.

### TECHNICAL FIELD

The present subject matter relates to techniques and equipment to a method for physical-sample-based color profiling.

### BACKGROUND OF THE INVENTION

Color conversion is an important process for ensuring consistent color in printed product (e.g. packaging), even when different printers, operating in different color spaces, are used. Printing companies convert colors between different color spaces so that different printers can print a consistent product. If the color profile of the source printer is known, the color conversion to a destination printer profile (which is also known) is fairly straightforward.
US 2004/184658 A1 describes an image processing method for performing color conversion among a plurality of image forming apparatuses, including the steps of: a) producing a plurality of color profiles provided for performing color conversion on input image information within a same color space or through different color spaces; and b) selecting one of the plurality of color profiles whereby color in an image formed by one of the plurality of image forming apparatuses may be approximately equal to color of an image formed by another of the plurality of image forming apparatuses.
Aston Zhang et al: "Dive Deep Learning", ARXIV.ORG, Cornell University Library, 201 Olin Library University ITHACA, NY 14853, 21 June 2021 (2021-06-21), XP091005704 describes the impact of deep learning on pattern recognition for use in computer vision, natural language processing and automatic speech recognition.
US 2008/111998 A1 describes systems and methods are provided that accurately estimate a post-printing appearance of a color on a substrate. In addition, systems and methods are provided that accurately estimate a post-mixing appearance of several colors mixed on a substrate.
Zhao Lei: "Study on Printer Characterization Based on BP Network", Proceedings of the 2015 International Conference on Industrial Technology and Management Science, 1 November 2015 (2015-11-01), pages 1693-1696, XP055982657, Paris France describes the relationship between input digital image pixel value and printed color chromatic values, wherein a printer characterization model is established based on artificial BP neural network.
US 2021/133522 A1 describes a system including a processor and a non-transitory computer-readable medium having stored therein instructions that are executable to cause the system to perform various functions.

However, sometimes the color profile of the source printer is not known. Printing companies often receive jobs (i.e. requests to print a product) from their customers as nothing more than a consolidated file (e.g. a file in Portable Document Format (PDF)) containing ink values for printing the product, and a physical sample of the printed product (i.e. the printed packaging) created by the source printer. As used herein the exemplary term PDF is used in shorthand, but should be understood as a non-limiting term that may refer to any type of consolidated file. Using only prior art technology, the printing company cannot directly convert the ink values in the PDF to the destination printer color space in a way that matches the physical sample created by the source printer, because the color conversion from the PDF ink values to the color space of the source printer is unknown. For example, as is known in the art, the PDF ink values may be expressed in an ink space that includes more or fewer inks than may have actually been used for printing. For example, PDF ink values may be expressed in a CMYKOGV ink space or CMYK+ (wherein the + is a specific spot color), but the source printer may have elected to print using fewer colors for efficiency or cost savings, particularly if the finished print could be produced within tolerance with fewer inks. Without knowing the color conversion performed by the source printer, printing companies have historically been unable to accurately perform a conversion to the destination printer color space in a way that allows the product printed by the destination printer to accurately replicate the original product printed by the source printer. Particularly in the field of consumer product packaging printing, the print customers want new print packaging printed by a second printer to replicate as close as possible the old print packaging printed by a first printer, so that the print packaging emanating from different printing sources are not materially perceptibly different when viewed side-by-side, such as, e.g., on a supermarket shelf.

### SUMMARY OF INVENTION

One aspect of the invention relates to a computer implemented method for replicating printing output of a source printer having an unknown color profile. This method comprises receiving a source file of ink values used by the source printer to print a printed product, measuring at least portions of the printed product to produce measured values of the printed product in a device-independent color space, computing a source device-to-lab (A2B) function that converts the ink values in the source file to the measured values, and using a destination lab-to-device (B2A) function to convert the values in the device-independent color space to ink values for a destination printer..

The step of computing the source device-to-lab (A2B) function that converts the ink values in the source file to the measured values, may include the steps of a) estimating a proxy color profile for the ink values, b) pre-training a source neural network using the ink values from the source file and proxy color values from the proxy color profile, c) finetune-training the source neural network using the ink values from the source file and the measured values, and d) converting the ink values from the source file to the measured values using the finetune-trained source neural network.

### BRIEF DESCRIPTION OF THE DRAWINGS

The drawing figures depict one or more implementations, by way of example only, not by way of limitations. In the figures, like reference numerals refer to the same or similar elements.
FIG. 1 is a block diagram of customer and printer company interactions when printing a printed product by a source printer and then attempting to replicate a printed product by a destination printer, according to an embodiment of the disclosure.
FIG. 2 is a flowchart of the conversion estimation with respect to the customer and printer company interactions shown in FIG. 1, according to an embodiment of the disclosure.
FIG. 3 is a flowchart of source A2B function determination for the conversion estimation in FIG. 2, according to an embodiment of the disclosure.
FIG. 4 is a flowchart of destination B2A function determination for the conversion estimation in FIG. 2, according to an embodiment of the disclosure.
FIG. 5 is a flowchart of printing based on the conversion estimation in FIG. 2, according to an embodiment of the disclosure.
FIG. 6 is a block diagram of hardware components of the various devices, according to an embodiment of the disclosure.
FIG. 7A is an exemplary image corresponding to a printed product and related source file for processing in accordance with aspects of the invention.
FIG. 7B is an exemplary arrangement of sample areas for taking colorimetric date in accordance with aspects of the invention.
FIG. 7C is an exemplary arrangement of the sample areas in FIG. 7B superimposed on the image of the printed product in FIG. 7A in accordance with aspects of the invention.
FIG. 8 is a schematic diagram of a method for printing a physical printed embodiment on a destination substrate, based upon a reference electronic job file and a source printed embodiment.
FIG. 9 is a dependency diagram of the components utilized in one exemplary embodiment to achieve a new physical sample that looks substantially similar to an original sample, printed on a destination press.
FIG. 10A illustrates an exemplary color profile chart.
FIGS. 10B and 10C illustrate an exemplary application of a profile to a random slice in a captured image of the exemplary color profile chart, constituting an exemplary destination color profile.
FIG. 11A illustrates an exemplary captured image of a source printed embodiment.
FIG. 11B illustrates an exemplary image matching technique or image transformation algorithm to map similarities between a job file image and a source printed embodiment.
FIG. 11C illustrates an exemplary overlay of job and printed embodiment images with a percentage of the mismatched pixels are eliminated and marked with 50% gray.
FIGS. 11D, 11E, and 11F illustrate the job file, the captured image of the source printed embodiment, and the source profile network applied to the job.
FIG. 11G illustrates the result of the destination print profile applied to the image of Fig. 11F.
FIG.12 is a flowchart depicting a method for determining a destination print profile for a destination printer, the destination print profile comprising a destination printing system ink specification corresponding to an electronic job file color specification.

### DETAILED DESCRIPTION OF THE INVENTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Reference now is made in detail to the examples illustrated in the accompanying drawings and discussed below.

### INTRODUCTION

Described herein is a method for estimating an unknown color conversion performed by a source printer from PDF ink values to the color space of the source printer. This estimated color conversion may then be used by the destination printer to accurately replicate the printed product created by the source printer from the PDF ink values.

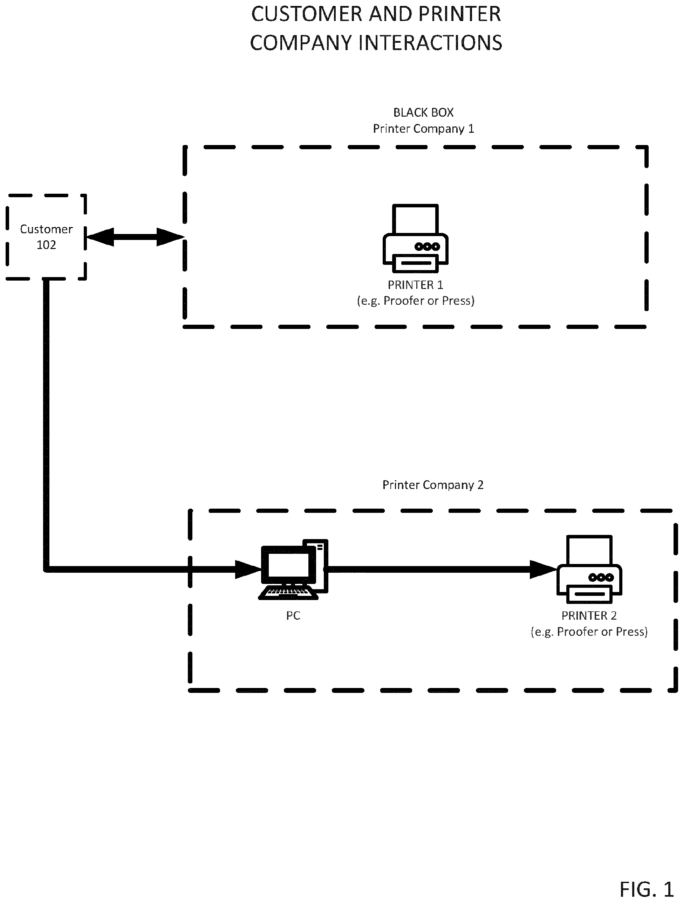

FIG. 1 is a block diagram of customer and printer company interactions when printing a printed product by a source printer and then attempting to replicate a printed product by a destination printer. For example, customer 102 originally sends a product design (e.g. PDF file containing the content to be printed, along with ink values associated with the color of the printed content) to Printer Company 1. Printer company 1 (represented as a black box) then prints the product design. However, source printer 1 has a specific color profile. This color profile is based on the ink combinations available to source printer 1, color characteristics of the substrate on which the job is to be printed, and characteristics of the printer itself, which usually requires some conversion of the PDF file ink values received from the customer. This means that source printer 1 cannot simply use the PDF file ink values to perform printing to the commands actually executed by the source printer. Thus, prior to printing, source printer 1 or a processor, such as in a personal computer (PC) (not shown) performs a conversion of the PDF file ink values based on the color profile of source printer 1. This conversion allows source printer 1 to print the product based on best-fit ink values (i.e. printer ink values closest to the PDF ink values) to create on the substrate the color as desired by the designer.

At a later time, customer 102 may send the product design (e.g. the PDF file containing ink values) to a different destination printer company 2. Frequently, this request includes the PDF file (containing the ink values) and a physical copy of the previously printed product (i.e. product previously printed by source printer company 1), but does not include details of the ink conversion performed by source printer company 1. The details of the ink conversion performed by source Printer Company 1 need to be determined or at least accurately estimated in order to accurately match the product printed received from the customer within a desired level of tolerance.

### OVERALL SOLUTION

In accordance with one aspect of an embodiment of the invention, a method includes destination Printer Company 2 in FIG. 1 estimating the unknown ink conversion performed by source Printer Company 1. Specifically, the destination computer processor (e.g. utilizing downloaded or recorded software on a PC, non-downloadable software residing on a server, or a combination thereof) executes instructions that use the PDF file ink values and an image with measured color values (e.g. using a spectrometer or spectrally precise camera or scanner) of the physical sample received from customer 102. The method includes estimating what is referred to herein as a "device-to-Lab" (A2B) function that converts the ink values in the source file to device-independent color space values (e.g. values in RGB that would, for example, be used for viewing the scanned image on a display (e.g. of the PC)). The A2B function can then be combined with what is referred to herein as a "Lab-to-device" (B2A) function that converts the device-independent color space values to ink values for use by destination printer 2.

Although the term "scanned image" is used herein, this term should be understood to refer to the image containing measured values, regardless of technology used to obtain the measured values. Measured values are generally collected in a table of data points from the sample. These data points can be manually defined, or may be automatically defined by an algorithm.

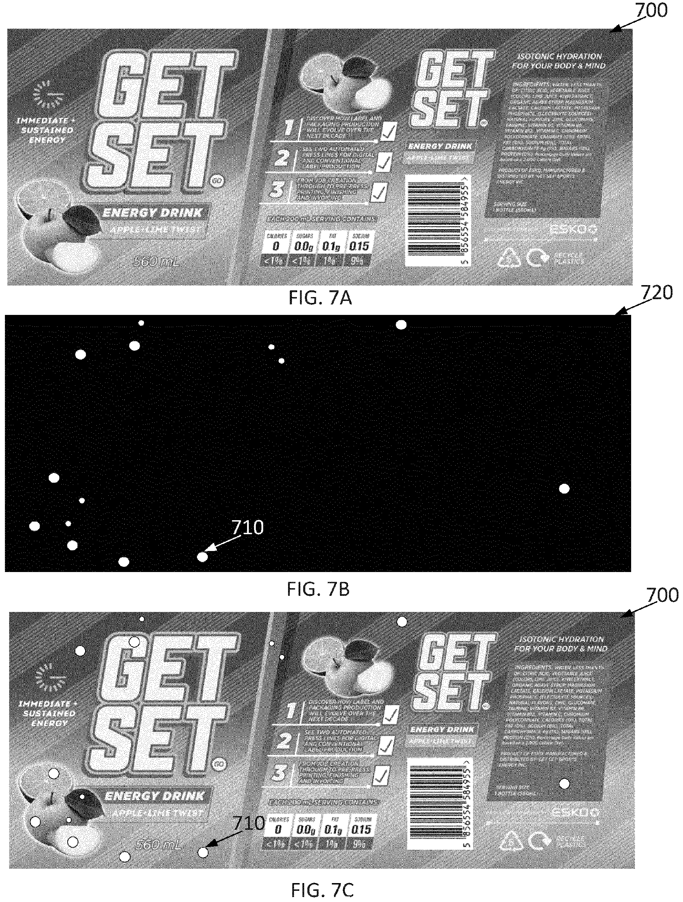

For example, referring now to the exemplary image 700 depicted in FIG. 7A, which image corresponds to the source file and the printed product for processing, an arrangement of dots of varying sizes may be manually or automatically identified at selected locations, such as in the locations of the white dots 710 depicted in mask 720 shown in FIG. 7B. The details of the sample as depicted in FIG. 7A are not shown for simplicity, and the content of any text depicted thereon is not intended to be readable or to form a part of this invention. Mask 720 may be created in a physical form in the same size as the sample, with holes in the locations of the white dots, and measurements with a colorimeter made of the sample through the holes. Or, the mask may be virtually superimposed over the source file as shown in FIG. 7C to direct manual/automatic sampling. The colorimeter readings may then be mapped to the source file ink values manually or automatically. In other embodiments, a colorimeter may be connected to a computer that also has access to the source file, with points on the sample registered in a coordinate system corresponding to a like coordinate system in the source file, and the colorimeter location tracked in real time, so that the location of the colorimeter on the sample is shown on a display of the computer and the readings taken by the colorimeter mapped to the corresponding values in the source file.

The dots identifying the colorimeter sample locations may overlap numerous source file ink values. The source file can be sampled at these points to collect the ink combinations overlapped by the dots, either as the center of the dots, or as an average of the whole dot. These specific points can either be measured on the package manually using a spectrophotometer, as described above, or scanned automatically by feeding the positions to an automatic spectrophotometer having coordinates relative to the sample registered in correspondence to like coordinates on the PDF. The spectral values measured by the colorimeter are then converted to Lab values. Rather than selecting dots, a line may also be drawn across an important region of the package by a spectrophotometer, thereby collecting many different points along the line through an identified important region aligned with the data from the job.

Locations for colorimetric measurements of the sample may be selected by any number of factors, preferably strategically based upon the ink values in the source file, such as selecting colors most frequently utilized, colors corresponding to single ink values, colors corresponding to minima and/or maxima for one or more of the ink colors, critical design colors (e.g. brand colors or spot colors), solid rendering colors, and the like, without limitation. For example, with respect to the minima and/or maxima, the solid color of the ink may be set as a maximum, and the color of the printing substrate may be set as a minimum, thereby providing a minima that is common for every color.

Other image capturing devices can also be used to capture measured values of the sample. For example, if sRGB is an adequate intermediate space, rather than using a spectrophotometer, the system may simply use scanner or camera to capture an image of the package. The system then aligns this image with a render of the job using techniques such as SIFT, ORB or SURF, and then records the values of identified pixels, each of which includes a pair of ink values (the input space) and an RGB value (the intermediate space). In this technique, RGB values may be averaged if their corresponding ink values are the same. Alternatively, if a full spectral scanner is available with acceptable spectral quality, Lab information may be directly determined by scanning the sample using such a scanner.

As the captured dataset may be limited, it may be useful to enhance the dataset. Because the job typically has ink names recorded in the PDF, these ink names may be queried from a database of spectral data. Alternatively inks with spectral data may be queried by finding the closest matching ink to an RGB equivalent embedded in the job. Alternatively, some inks may be identified as process inks, and a standardized profile (e.g. isocoated) may also be loaded into the system. These full spectral inks and/or profiles may be fed to an ink model (a function that makes an approximation to an overprint of inks) to make an artificial dataset. This artificial dataset may then be combined with the real dataset. An example of this process may be that for every ink in the input space: if the closest point in the dataset to a solid of that ink has a distance (e.g. Euclidean distance) larger than a predetermined threshold, the system adds the solid from the artificial dataset. Another example may be for every combination of inks that occur in the job, and for every point according to a chosen sampling technique: if the closest point in the dataset to this sampled point is larger than a predetermined threshold, the solid from the artificial dataset is added. Artificial points may be identified so that any algorithm producing the A2B can take into account that some points are more accurate than others.

As used herein with reference to exemplary embodiments, the term "Lab" refers to the CIELAB color space, also referred to as L*a*b*, which is a color space defined by the International Commission on Illumination, and which expresses color as three values: L* for perceptual lightness, and a* and b* corresponding to red, green, blue, and yellow. As is understood to those in the art, the CIELAB color space is a device-independent, "standard observer" model derived from averaging results of color matching experiments under laboratory conditions. The invention is not limited to the use of an L*a*b* color space, however, and is applicable to the use of any standardized device-independent color space that may be known in the art now or in the future, such as but not limited to L*a*b*, RGB, sRGB, and the like, without limitation. Thus, the use herein of the shortened, generic form "Lab" in discussion of the exemplary embodiment is not intended as a limitation to any specific device-independent color space, but merely as an example. As used herein, the term "PC" may be used generally to refer to specific embodiments, but it should be understood that the invention is not limited to any specific type of computer system, and may include systems that use software executed by server computers residing "in the cloud" in communication with mobile devices (such as phones or tablets), laptops, or desk computers, or software recorded and executed within a local (e.g. desk, laptop, or local network server) computer system.

More specifically, the PDF ink values and measured image values are used to train an A2B neural network (NN) to estimate the source A2B function. In one example, the destination B2A function may already be a known function (i.e. a known conversion from a color space of a display or proofer associated with the destination printer to the color space of the destination printer). In another example, however, the destination B2A function may also be estimated using a B2A NN. More specifically, Lab values are input to the B2A NN. The ink value predictions output by the B2A are then input to the known destination A2B function. The Lab values output by the destination A2B function should match the Lab values originally input to B2A NN if the B2A function is accurately estimated.

Regardless of whether Printer Company 2 uses a known B2A function or an NN-estimated B2A function, the result is that the Lab values output by the source A2B function are then input to the B2A function to convert the Lab values to the ink values for printing by destination printer 2. The combination of source A2B + destination B2A conversions therefore accurately estimate the conversion of the PDF file ink values performed by source printer company 1, thereby resulting in a printed product that accurately replicates the printed product received from the customer.

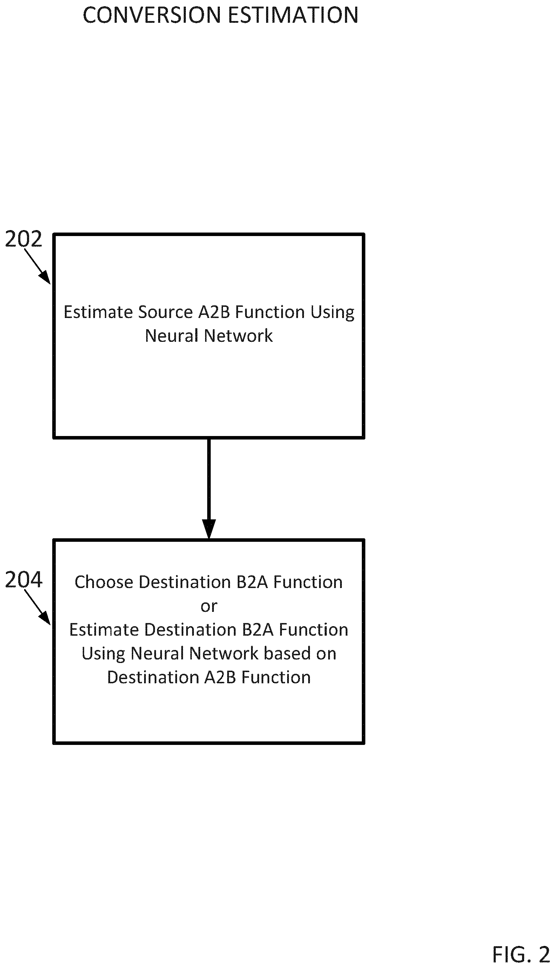

FIG. 2 is a flowchart of the overall conversion estimation process. The overall conversion estimation process includes two main steps. The first step 202 is the estimation of the A2B function. The second step 204 is the selection or estimating the B2A function.

In step 202, the following steps are taken to estimate the source A2B function. In step 202, the PC finds a proxy color profile that is appropriate for the PDF ink values. Specifically, the PC analyzes the ink values in the PDF to estimate best fit proxy for the color profile. For example, the ink values may suggest a color profile in a standard CMYK ink space would be acceptable, or may suggest that more or fewer inks (including spot colors) may be optimal. Thus, the selection of proxy color profile may also include selecting the ink space. Selection of the proxy color profile may be performed by selecting a logical profile based on the number of process colors referenced in the PDF, and selecting the correct colors (e.g. Pantone matching). However, if a logical profile cannot be found (e.g. Pantone Matching cannot be performed), then the PC may use Lab or RGB equivalents (or another device-independent color space) as the proxy color profile. Overprints in the PDF may also be calculated using an overprint model, which may help in deciphering the ink values and determining the best fit proxy ink space. The selection of proxy color profile may also consider information about the physical sample, including the measured values, measured or known information relating to the background substrate color or materials (e.g. recognizable use of a white underprint, known sourcing for the substrate materials, measured substrate color values from a non-printed region), or measured values suggesting a gamut achieved by the unknown source printer as compared to the specified ink values in the PDF that is, for example, consistent with use of only a standard (e.g. CMYK) ink space, or only achievable using a non-standard ink space (e.g. CMYKOGV).

Once the proxy color profile is chosen, the PC pre-trains the source A2B NN. Specifically, the PC inputs the PDF ink values to the source A2B NN and compares predicted Lab values to known Lab values associated with the chosen proxy ink space. If the source A2B function is accurate, then the Lab values output by the source A2B function should match the known Lab values of the proxy. If not, adjustments to the source A2B NN are made until matching occurs (e.g. delta-E between calculated color value and measured color value is within a predetermined tolerance). In one example, the delta-E utilized may be the average delta-E across the training set (e.g. a combination of real and estimated color values). In another example, the delta-E utilized may be delta-E in critical areas or most used color combinations. When matching occurs, the source A2B function is accurately estimated. This process is repeated until the A2B NN is pre-trained to accurately perform A2B conversion of proxy values.

Once the NN is pre-trained, the PC then fine-tune trains the source A2B NN. Specifically, the PC extracts important portions of the measured values (e.g. measured by a spectrometer, not shown) of the physical sample and records their positions in the PDF. These important portions may be determined manually by the technician or via some algorithm such as choosing areas with common colors for further analysis. For example, important portions may be selected as portions with commonly used color combinations. Once the important portions are selected, a technician may provide measured color coordinates for those portions, such as by using a spectrometer to provide actual color measurements in the physical sample for the selected portions in the independent color space under repeatable controlled conditions. The PC then creates a table mapping the locations of the lab values of these measured portions to corresponding locations of known ink values in the PDF. The PC then inputs the PDF ink values to the pre-trained source A2B NN and compares predicted Lab values to known lab values for the proxy and the known lab values of these measured portions. In other words, lab values of measured portions are substituted for some of the known lab values for the proxy during the learning process. The PC repeats this process until source A2B NN is fine-tuned to accurately perform source A2B conversion to proxy values that match the proxy values corresponding to the measured values. Once trained, the source A2B function can accurately estimate Lab values from the PDF ink values. Generally, the A2B function indicates how the image printed with a combination of identified ink colors (process and/or spot) are expected to appear when printed. The system may sample a profile (e.g. CMYK, CMYKOGV, etc.) and corresponding ink definitions to produce a color strategy, combining input profile, input inks, output profile, and any settings the user desires (e.g. black generation).

As an alternative to creating the source A2B function using a NN, the source A2B function may be created using a trainable theoretical overprint model. For example, in such a model, each ink may store a number of weights with weight value ranges that are preserved through a transformation (e.g. tanh) and a rescaling. For example, the weight values may correspond to a plurality of wavelength responses. For example, the weight values may be represented as a fraction of photons reflected for each wavelength (e.g. 36 wavelength responses in [0, 1] space, wherein 1 is total reflection, and 0 is no reflection), multiplied by a plurality of weighting curve parameters, one for each wavelength (e.g. 36 weighting curve parameters in [0.5, 2] space, wherein weightings of 0.5-2X for each wavelength represent a range that is intuitively practical). If the values in the weights are stored manually, the method reverses the rescaling first. The model may also include a plurality of wavelength responses (e.g. 36) for the substrate. The model preloads these wavelength responses with existing ink and substrate definitions. An exemplary model may calculate Lab values from ink values as follows:
- percentages = inputs ^ curve parameters*, where the inputs are the inputs to the neural network representing the amount of ink specified;
- tints = (solids / substrate) ^ percentages;
- spectrum = product of all tints and the substrate; and
- Lab = default conversion from the spectrum under a selected illuminant (e.g. a characterized light source).
* This gives a different percentage per ink corresponding to each wavelength.
The system preloads the model using a spectral dataset queried from a database. For example, the spectral dataset may be obtained from a Pantone Solid Coated book, such as solid spectra values provided by the Pantone Solid Coated book. In another example, the spectral dataset may be obtained from a custom ink book, or may be queried from a print profile. The entire model is differentiable, so the system can optimize all weights using backprop and a gradient descent optimizer, (e.g. the Adaptive Movement Estimation algorithm, aka "Adam") to match the dataset.

In step 204, the following steps are taken to choose/estimate the destination B2A function. When choosing a destination B2A function, technician or an algorithm takes into account the color profile of destination printer 2 and other factors. The goal being to choose a destination B2A function that enables destination printer 2 to reproduce an accurate replica of the printed product.

However, a more accurate destination B2A function may be estimated by training a destination B2A NN. During training, the PC inputs Lab values to the destination B2A NN which then predicts ink values. These predicted ink values are then input to known destination A2B function which converts the predicted ink values back to Lab values. The PC then compares Lab values output by the destination A2B function with the original Lab values input to the destination B2A NN. If the destination B2A function is accurate, then the Lab values output by the destination A2B function should match the original Lab values input to the destination B2A NN. If not, adjustments to the destination B2A NN are made until matching occurs. When matching occurs, the destination B2A function is accurately estimated. Other steps may be utilized to simplify the destination B2A NN. For example, ordinates may be restricted between 0-1, and the PC may also stop impermissible color combinations (e.g. combinations of opposite colors, such as cyan and orange, and/or unmeasured combinations, such as orange and green).

Once the source A2B function and destination B2A function are determined, they may be combined by the PC into a single color profile function for converting the PDF ink values to the destination printer ink values, or the A2B and B2A functions may be sequentially applied. This complete model effectively replicates the unknown conversion performed by source printer 1 so that the product printed by destination printer 2 matches, within a predetermined tolerance, the product printed by source printer 1.

### SOURCE A2B & DESTINATION B2A SOLUTIONS

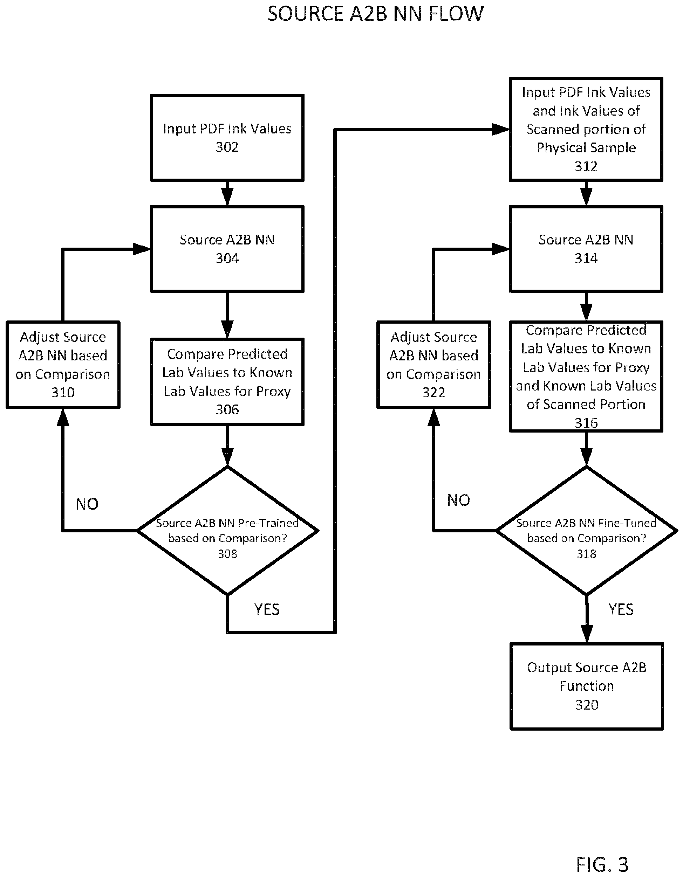

FIG. 3 is a flowchart of source A2B function determination for the conversion estimation in FIG. 2. Steps 302-308 describe the pre-training of the source A2B NN. Specifically, in step 302, the PDF ink values are input to the source A2B NN and then processed by the source A2B NN in step 304. The predicted Lab values output by the source A2B NN are then compared to known Lab values for the chosen proxy.

If in step 308 it is determined that the source A2B NN is not pre-trained (e.g. predicted Lab values output by the source A2B NN do not match the known Lab values of the proxy), the method adjusts the source A2B NN in step 310 and repeats the process. If, however, in step 308 it is determined that the source A2B NN is pre-trained (e.g. predicted Lab values output by the source A2B NN match the known Lab values), the method moves on to fine-tune training steps 312-320.

Steps 312-320 describe the fine-tune training of the source A2B NN. Specifically, in step 312, the PDF ink values and ink values of measured portions of the physical sample are input to the source A2B NN and then processed by the source A2B NN in step 304. The predicted Lab values output by the source A2B NN are then compared to known Lab values for the chosen proxy and known Lab values for the measured portions. If in step 318 it is determined that the source A2B NN is not fine-tuned trained (e.g. predicted Lab values output by the source A2B NN do not match the known Lab values), the method adjusts the source A2B NN in step 322 and repeats the process. If, however, in step 318 it is determined that the source A2B NN is fine-tuned trained (e.g. predicted Lab values output by the source A2B NN match the known Lab values), the method outputs the estimated source A2B function (e.g. the trained source A2B network with its weights frozen) in step 320.

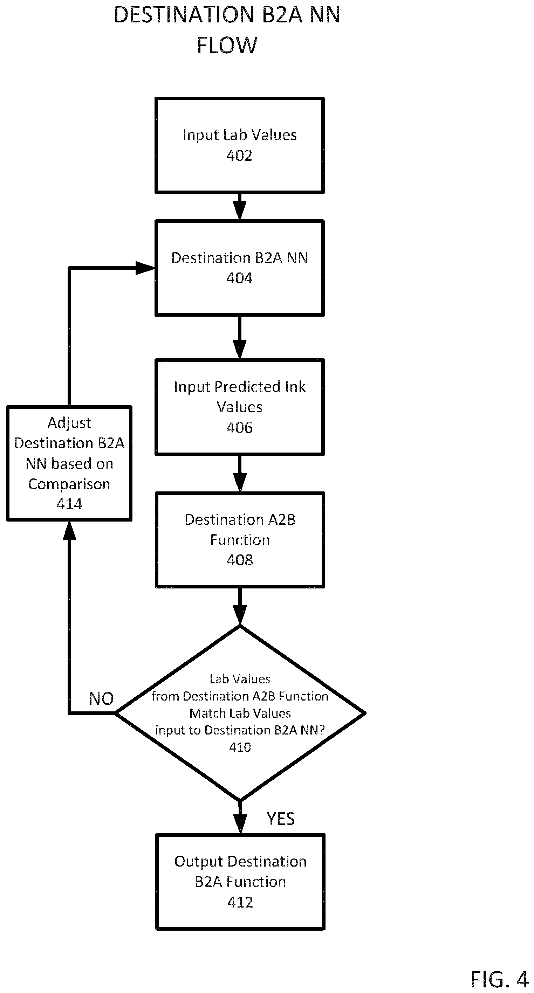

FIG. 4 is a flowchart of destination B2A function determination for the conversion estimation in FIG. 2. Steps 402-414 describe training of the destination B2A NN. Specifically, in step 402, Lab values are input to the destination B2A NN and then processed by the destination B2A NN in step 404 to produce predicted ink values. These predicted ink values output by the destination B2A NN are then input to the already known destination A2B function (e.g. an A2B function of the destination device) in step 408 which outputs predicted Lab values. The method then compares, in step 410, the Lab values originally input to the destination B2A NN for training to the predicted Lab values output by the known destination A2B function.

If in step 410, it is determined that the Lab values originally input to the destination B2A NN for training do not match the predicted Lab values output by the known destination A2B function, the destination B2A NN is not trained, and therefore the method adjusts the destination B2A NN in step 414 and repeats the process. If, however, in step 410 it is determined that the Lab values originally input to the destination B2A NN for training match the predicted Lab values output by the known destination A2B function, the destination B2A NN is properly trained and therefore the method moves outputting the destination B2A function (e.g. the trained destination B2A network with its weights frozen) in step 412.

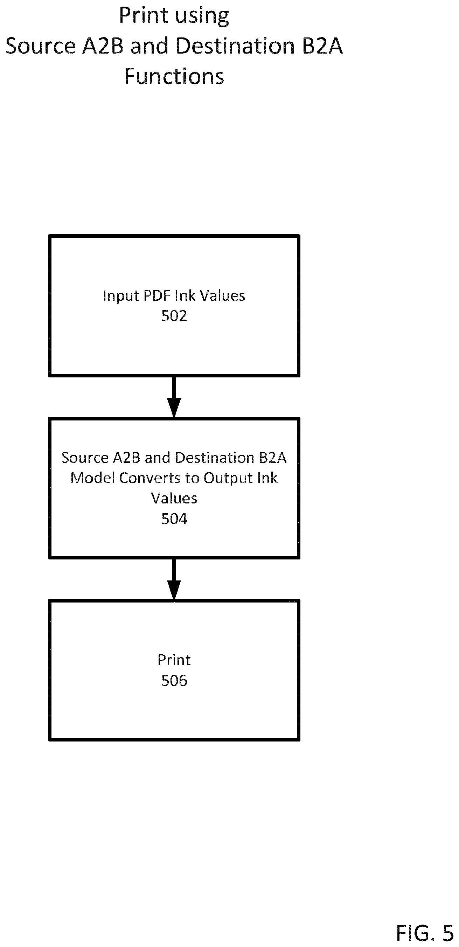

In general, once the source A2B function and the destination B2A function are estimated via their respective NN training processes, they can be combined into a single color profile function to be used by destination printer 2 to perform an accurate conversion. FIG. 5 is a flowchart of conversion and printing. In step 502, the PDF ink values are input. In step 504, the source A2B function converts the PDF ink values to Lab values to produce an image that is viewable by the technician, e.g. on a color-calibrated PC display screen or with a color proofer. This image may be used by the technician to confirm the product image or make adjustments if desired. In step 504, the destination B2A function then converts the Lab values to ink values for destination printer 2. In step 506, destination printer 2 prints a physical sample that matches the physical sample received from the customer.

### SOURCE A2B and DESTINATION B2A NEURAL NETWORKS

The source A2B and destination B2A neural networks used to estimate the source A2B and destination B2A functions do not need to have a specific structure. For example, the number of hidden layers and the chosen activation/loss functions are flexible, although more complex networks provide increased accuracy. The weights for each neuron in the NN may be initialized in various manners, including randomly, if starting a NN from scratch or deterministically based on the weights of a previously trained NN. The NN may also be a fully connected or partially connected network. The general flow is that forward propagation through the NN is performed to predict output and compare predicted output to a known value to compute loss, followed by backward propagation through the NN to adjust the neuron weights based on the computed loss, with a goal to minimize the loss. The activation functions used by the layers of the NN may be, for example, a sigmoid function, rectifier linear unit (RELU) or the like. The training data (e.g. known Lab values, known ink values, etc.) may also be subdivided into epochs, where some epochs are used for training, while other epochs are used for testing in order to perform cross-validation and ensure that overfitting has not occurred.

A number of optional modifications may be used to enhance the performance and accuracy of the NN training. In one example, giving more weight to the substrate and tints of individual inks ensures that they are the most accurate patches and also constrains the other patches to stay inside gamut (e.g. in the source A2B case). In another example, the last layer of the destination B2A network may use a sigmoid activation function or similar function to constrain the output between 0 and 100%. Yet another exemplary modification may include clipping the last layer and adding a loss function just before the clipping layer that penalizes values outside of the [0%-100%] range. While a loss function may prevent impermissible combinations in most cases, sometimes they will still occur. Therefore, a transformation layer may combine two channels that cannot occur together by putting them on the same axis (one channel becomes negative values, the other positive). A layer doing the inverse may also be built for the destination B2A network.

In another example, a database may be filled with profiles (ink charts containing device coordinates (e.g. CMYK) with corresponding Lab/XYZ/sRGB/... values, etc.) and their correspondingly trained source A2B and destination B2A networks. There may be multiple destination B2A networks for multiple types of constraints. For example, in a first step, the database is filtered for profiles containing the same inks. This may also include profiles which have more inks (e.g. CMYKOGV may be used for retraining CMYK). Exemplary profiles include CMYKO, CMYKOG, CMYKOV, CMYKOGV, without limitation. Alternatively, the database may be filtered based on printing conditions if the database of profiles becomes too large to handle otherwise. The PC may take the corresponding source A2B networks in the database and use one or more of them to convert the profile patches to the device independent color space (Lab/XYZ/sRGB/...values, etc.). A desired difference function may be used to take the average distance between the real Lab values and the predicted Lab values by the destination B2A networks. The PC takes the source A2B and destination B2A networks that produce the closest match according to the difference function. Alternatively, a different metric than average distance may be taken.

### EXAMPLE

Reference now is made in detail to a specific example illustrated in the accompanying drawings and discussed below.

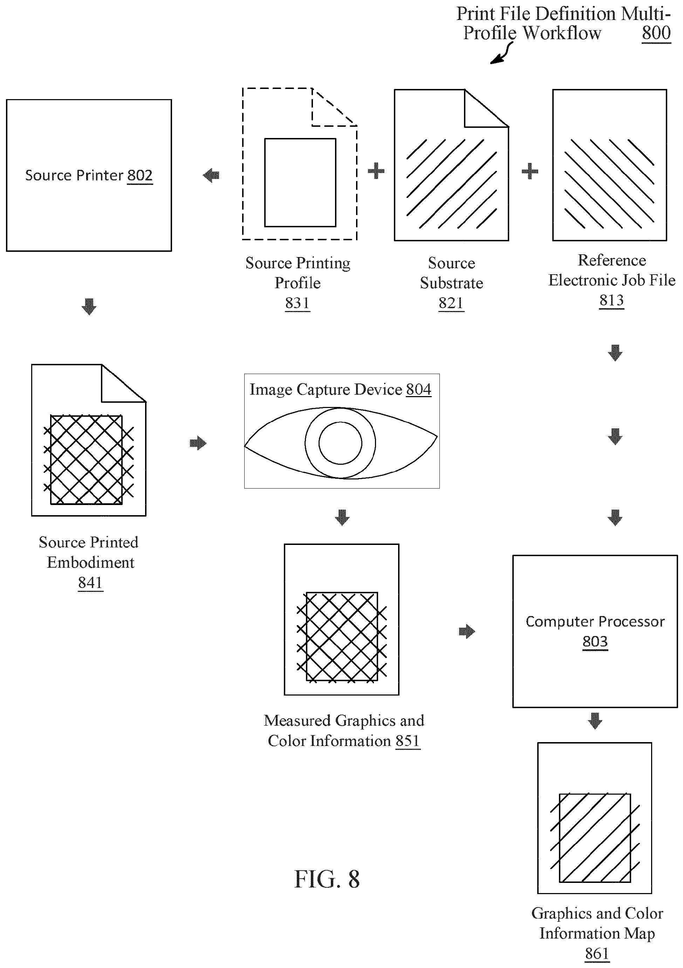

FIG. 8 illustrates a print file definition multi-profile workflow 800 diagram of a method for printing a physical printed embodiment on a destination substrate. The workflow 800 as depicted comprises a source printer 802, which is configured to receive a graphics file and an associated reference electronic job file 813. The graphics file may be in a variety of formats, such as a joint photographic experts group (JPEG) file, a portable network graphics (PNG) file, or a portable document format (PDF) file. The associated reference electronic job file 813 may include, without limitation, the ultimate size of a printed image, resolution, and the ink color model, as well as the total number of prints per image to be pressed. Any instructions that may assist the source printer 802 may be included in the reference electronic job file 813. In this example, color information in the reference electronic job file 813 is represented schematically by the black lines extending from the bottom right to the top left on the icon representing job file 813. Notably, to avoid the use of color figures herein, graphics are used to represent both graphic and color information associated with the electronic job file FIG. 1.

The source substrate 821 is the substrate upon which the source printer 802 prints the graphic associated with the reference electronic job file 813. The source substrate 821 may be, for example, paper, metal, wood, plastic, cloth, ceramic, or a composite of one or more materials. If paper, the source substrate 821 may be a particular type of paper: for example, glossy or matte, thick or thin, and synthetic or recycled. In addition to the source substrate 821, the source printer 802 may have a standardized source printing profile 831. The source printing profile 831 may define whether the print will be coated, and what the print will be coated with; in addition, the source printing profile 831 may select particular inks based upon the colors requested by the reference electronic job file 813. Ideally, the source printing profile 831 should reflect and integrate the physical features of the source substrate 821, as well as the particular implementation features of the source printer 802, such as ink colors and types, and whether the printer is a dot matrix, inkjet, laser, or other type of printer.

In this example, the color contributions of the source substrate 821 are represented schematically by a sheet of paper with black lines extending from the bottom left to the top right pre-printed on the paper. In this example, the source printing profile 831 is represented schematically by a rectangle graphic on a sheet of paper. This schematic representation for the source printing profile represents the collective color contributions of source printer, inks, printer settings, and printing profile (i.e. everything except the job file and the substrate).

The source printer 802 receives the reference electronic job file 813 and the source printing profile 831 digitally, and receives the source substrate 821 as a physical input. The source printer 802, applies modifications of source printing profile 831 to the reference electronic job file 813, and prints upon the source substrate 821 exactly as the reference electronic job file 813 describes. Therefore, the source printer 802 prints ink on the source substrate 821 in accordance with the electronic job file 813 and the source printing profile 831, resulting in source printed embodiment 841, in which the schematic representation of the crosshatched pattern and overlapping rectangle arising from the combination of the schematic representations for the job file 813, source substrate 821, and printing profile 831 represent the color contributions that all three of these components make to the appearance of the source printed embodiment.

This source printed embodiment 841 is what must be duplicated by the destination press 905. However, without the exact information regarding the source substrate 821 or the source printing profile 831, the destination press 905 does not possess enough information to reproduce printed embodiment 841 on a destination substrate with accurate color, based only on the information in the job file 813. The print file definition multi-profile workflow 100 provides a means of creating an equivalent color profile representative of an unknown source printer, source inks, source printing profile, and source substrate using a given destination substrate, destination inks, destination printer, and destination printing profile.

The source printer 802 and destination press 905 may be digital presses, proofers, or other types of printers. Additionally, in some examples either the source printer 802, the destination printer 905, or both, may be computer displays. In such examples, the source printed embodiment 841 or the destination printed embodiment 942 is an image displayed upon the computer displays. These examples utilizing the computer displays are particularly useful for system testing and diagnostics for other physical printers attempting to implement the print file definition multi-profile workflow 100.

An image capture device 804, such as a spectrophotometer or a camera, captures an image of the source printed embodiment 841. The lighting conditions should be controlled when the image capture device 804 captures the image of the source printed embodiment 841, (e.g. under a diffuse light in a windowless room). That captured image is converted into measured graphics and color information 851, which is information describing printed embodiment 841. In this example, the schematically representation of a cross-hatch graphic with overlapping rectangle for, the measured graphics and color information 851 is agnostic as to the source of the color information, whether from the electronic job file 813, the source substrate 821, or the source printing profile 831 (as applied to the source printer, using source ink, etc.).

Once the measured graphics and color information 851 is collected, the print file definition multi-profile workflow 800 includes a computer processor 803 to create a graphic and color information map 861. The computer processor 803 uses an algorithm to apply a difference of sets operation to the measured graphics and color information 851 as a first set, and the reference electronic job file 813 as a second set. The result of the difference of sets is the graphic and color information map 861.

Computer processor 803 serves to perform various operations, for example, in accordance with instructions or programming executable by the computer processor 803. For example, such operations may include operations related to communications between different graphics file printing components, or for transforming graphics files into other formats. Although the computer processor 803 may be configured by use of hardwired logic, typical computer processors 803 may be general processing circuits configured by execution of programming. The computer processor 803 includes elements structured and arranged to perform one or more processing functions, typically various data processing functions. Although discrete logic components may be used, the examples utilize components forming a programmable CPU. The computer processor 803, for example, may include one or more integrated circuit (IC) chips incorporating the electronic elements to perform the functions of the CPU. The computer processor 803, for example, may be based on any known or available microprocessor architecture, such as a Reduced Instruction Set Computing (RISC) using an ARM architecture, commonly used in mobile devices and other portable electronic devices. The computer processor 803 includes or has access to enough storage to store at least the reference electronic job file 813, the measured graphics and color information 851, the graphics and color information map 861, and instructions to implement the difference of set algorithm. Of course, other processor circuitry may be used to form the computer processor 803.

In this example, the graphic and color information map 861 includes black lines extending from the bottom left to the top right and the overlapping rectangle, schematically representing the missing information, that when coupled to electronic job file, will reproduce the color and graphics of source printed embodiment 841. The measured graphics and color information 851 includes black lines extending from the bottom left to the top right, black lines extending from the bottom right to the top left, and the overlapping rectangle. The reference electronic job file 813 includes black lines extending from the bottom right to the top left. Performing a difference of sets operation on these graphics results in (schematically) removing the black lines extending from the bottom right to the top left, and retaining the black lines extending from the bottom left to the top right along with the overlapping rectangle. It should be understood that although schematically represented by graphical information in FIG. 8, the graphic information is representative of color information (not graphics). The interaction of graphics and color will be further described herein later..

The graphic and color information map 861, resulting from the processing of the measured graphics and color information 851 of the source printed embodiment 841, and the reference electronic job file 813, now reflects the physical characteristics of the source substrate 821, as well as any particular implementation features of the source printer 802.

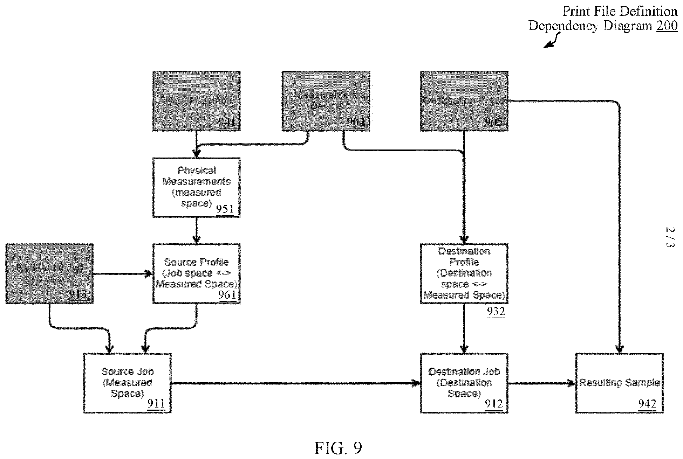

FIG. 9 is a dependency diagram of the components utilized to achieve a new physical sample 942 that looks substantially similar to an original sample 941, printed on a destination press 905. To succeed in generating a proper resulting sample 942, an original sample 941, a measurement device 904, a destination press 905, and a reference job 913 are provided. The original sample 941 coincides with the source printed embodiment 841; the measurement device 904 coincides with the image capture device 804; and the reference job 913 coincides with the reference electronic job file 813, and the color information of the reference job 913 exists in a job color space.

The measurement device 904 measures the physical sample 941, and produces physical measurements 951. The physical measurements 951 coincide with the measured graphics and color information 851, and the color information exists in a measured color space.

The physical measurements 951 are mapped with the reference job 913 to produce the source profile 961. The source profile 961 coincides with the graphics and color information map 861, as well as the source printing profile 831 in examples where the source printing profile 831 correctly associates with the source substrate 821, and the color information bridges between the job color space and the measured color space.

The reference job 913 is converted based upon the source profile 961 to create a source job 911. The source job 911 coincides with the source electronic job file 811, and the color information exists in the measured color space.

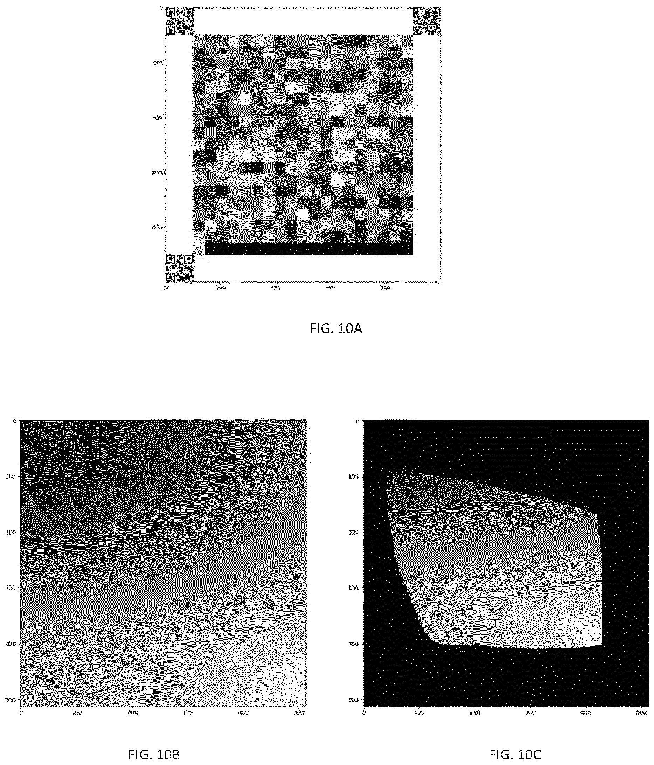

The destination press 905 generates a color sample array (like the reference colors 1014 in FIG. 10A), which is preferably an array of at least all of the colors expected to be within the reference job 913. The measurement device 904 measures the color sample array, and produces a destination profile 932. The destination profile 932 includes color information that bridges between a destination color space and the measured color space.

The source job 911 is converted based upon the destination profile 932 to create a destination job 912. The destination job 912 coincides with the destination printing job 912, and the color information exists in the destination color space. The destination press 905 uses the destination job 912 to print a resulting sample 942. The print file diagram dependency diagram 900 illustrates how the job color space is linked to the measured color space by the source profile 961, and the destination color space is linked to the measured color space by the destination profile 932. Applying the source profile 961 to the reference job 913 adds the facets, features, and color changes presented in the physical print but absent in the digital graphic, and makes the resulting source job 911 more true-to-life than the reference job 913. Using the destination profile 932 removes the particular physical differences in color and graphics the destination press 905 intrinsically produces. Removing these particular physical difference from the source job 911 by applying the destination profile 932 produces the destination job 912. The destination job 912 is less true-to-life than the source job 911, but because the destination press 905 will add to the realistic qualities of the final resulting sample 942, the destination job 912 being less true-to-life results in the resulting sample 942 being true-to-life: the resulting sample 942 is less likely to be overproduced or overexposed, and the resulting sample 942 is more likely to match the physical sample 941.

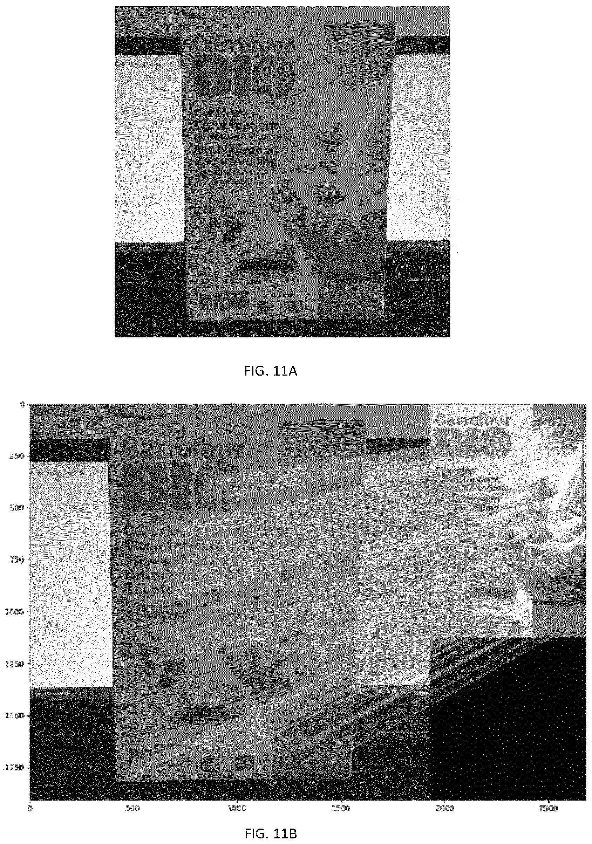

Referring now to FIGS. 10A - 11G, a more real-life example is illustrated. FIG. 10A illustrates a profile chart (e.g. reference printed embodiment), used for making a destination profile that connects a destination color space (e.g. a display) to a measured RGB space (e.g. a camera). The profile chart is surrounded by QR codes so that when capturing an image of the profile chart, detection of the QR codes permits a computer processor to automatically identify the profile chart portion of the image based upon detection of the QR codes. The use of 3 codes allows the processor to undo the perspective transform caused by taking the picture under a slight angle. The image is then cut into pieces, the pieces averaged, and the colors of the image-captured space are mapped to the original RGB colors of the chart. This mapping may be performed by, for example, a lookup table with interpolation or a neural network. FIGS. 10B and 10C illustrate application of the profile to a random RGB slice using a lookup table. The black region shown in FIG. 10C is outside of gamut: this example does not include gamut mapping to reduce complexity, in order to focus on the in-gamut parts. Using a lookup table may introduce some artifacts, and a neural network may exhibit better performance. The foregoing method maps a first color space to a second color space using the reference image. The mapping constitutes a destination profile network.

FIG. 11A illustrates an exemplary image of a source printed embodiment (a sample of product packaging). Best performance may be achieved using lighting conditions that are controlled within a consistent range of parameters. Ideally, the image of the source printed embodiment should be captured in time of day to the reference image or under a diffuse light in a windowless room. FIG. 11B illustrates use of an image matching technique or image transformation algorithm such as SIFT, SURF, or ORBS, to map similarities between the job file image (right) and the source printed embodiment (left). Similarity matches can then be used to construct a perspective transform matrix that maps the image of the source printed embodiment to the job.

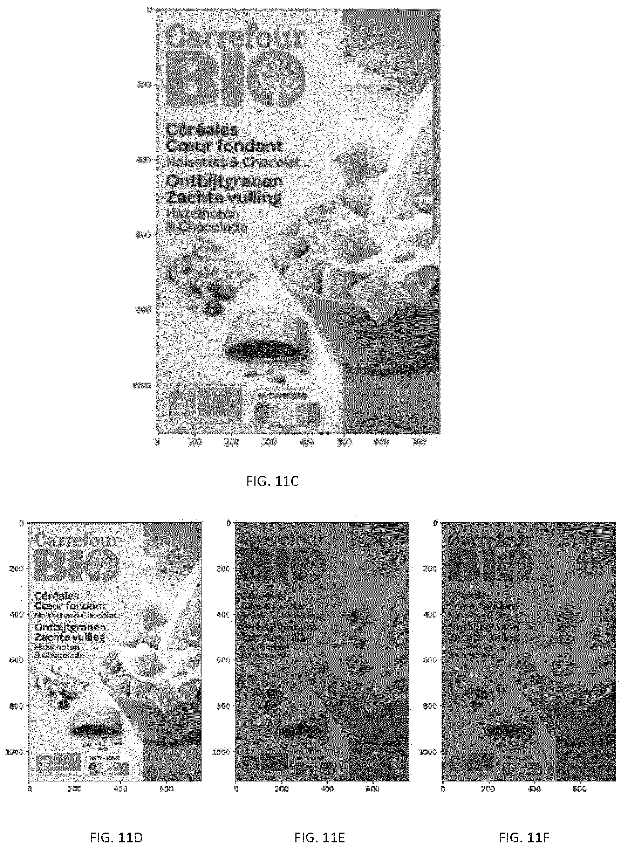

The job and printed embodiment images are overlaid, and the top x% of mismatched pixels are eliminated (as the warp may not be perfect). Eliminated pixels are marked with 50% gray in FIG. 11C, for illustration. The remaining, non-eliminated pixels are then paired piecewise and fed to a neural network with the goal of transforming a pixel from the job space to the measured space, thus creating a source profile network.

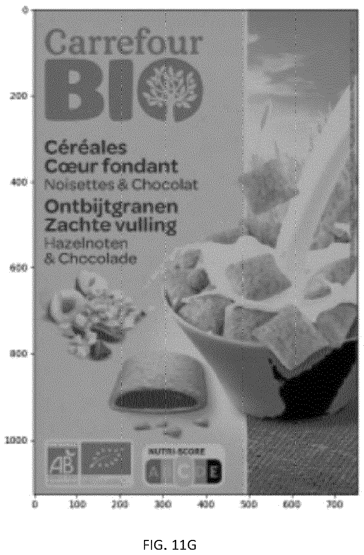

The source profile network is then used to convert the source job file to the measured color space (i.e. using a source A2B function as elsewhere described herein). Fig. 11D shows the job, Fig. 11E shows the picture of the physical sample, and FIG. 11F illustrates the source profile network applied to the job. Finally, the destination profile network (which maps measured color space to the destination space - i.e. a B2A function as elsewhere described herein) is applied to the file to get a result in the destination color space, as illustrated in FIG. 11G.

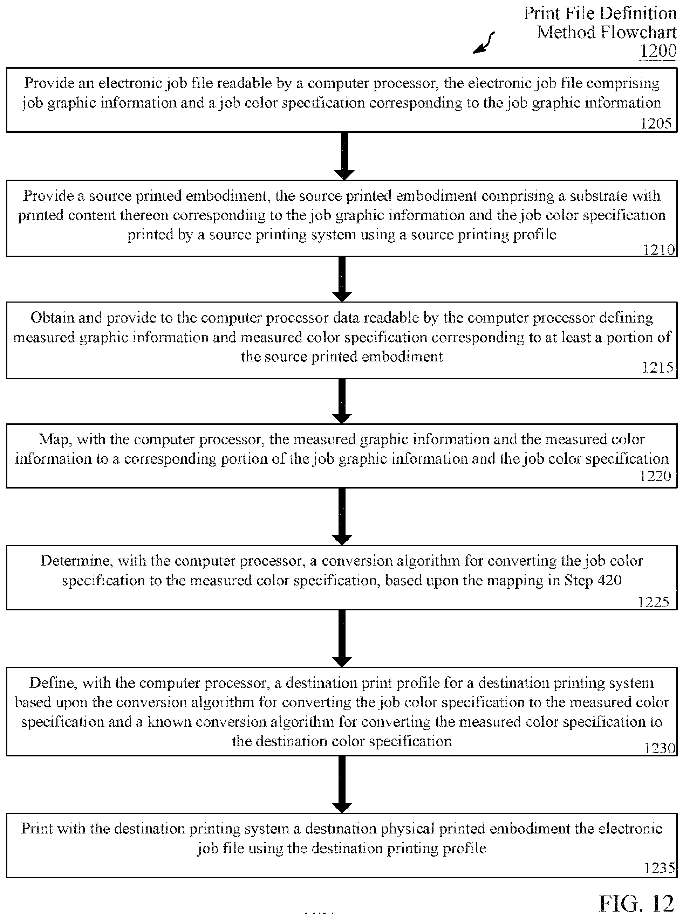

FIG. 12 is a print file definition method flowchart 1200 depicting a method for determining a destination print profile 932 for a destination printer 905, the destination print profile 932 comprising a destination printing system ink specification (e.g. destination printing job 912) corresponding to an electronic job file color specification (e.g. electronic reference job file 913). First, in step 1205, the method includes providing an electronic job file 913 readable by a computer processor 903, the electronic job file 913 comprising job graphic information and a job color specification corresponding to the job graphic information.

Next, in step 1210, the method includes providing a source printed embodiment 941, the source printed embodiment 941 comprising a substrate 921 with printed content thereon corresponding to the job graphic information and the job color specification of the reference electronic job file 913 printed by a source printing system 902 using a source printing profile 931. The source printed embodiment 941 corresponding to the job graphic information 913 may include a differing printed embodiment region, and the job graphic information 913 may include a differing job graphic information region. The differing printed embodiment region may lack correspondence with the differing job graphic information region. The differing regions may be ignored, or may be corrected or interpolated via algorithms or human correction.

Continuing, in step 1215, the method includes obtaining and providing to the computer processor 903 data (e.g. measured graphics and color information 951) readable by the computer processor 903 defining measured graphic information and measured color specification corresponding to at least a portion of the source printed embodiment. Step 1215 may have the method including obtaining the data defining a second graphic information and a second color specification (e.g. destination printing job 912) from an image of the physical printed embodiment 941 captured by an image capture device 904 characterized for a second printing system 905. The image capture device 904 may include a scanner. Alternatively, step 1215 may include obtaining the data defining a second graphic information and a second color specification from measurements captured by a spectrophotometer. Capturing the captured image of the physical printed embodiment 941 may include disposing a plurality of markers adjacent to the physical printed embodiment 941 when capturing the image. The method may include providing a display viewable by a human user, rendering on the display a visualization of the first graphic information and the first color specification, and showing on the display one or more paths or points for capturing the measurements with the spectrophotometer. Additionally, the method may include analyzing the electronic file with the computer processor 903, and defining with the computer processor the one or more paths or points for capturing the measurements with the spectrophotometer based upon a determination as to one or more portions of the electronic file expected to provide sufficient information to define a suitable second print profile.

Further, in step 1220, the method includes mapping, with the computer processor 903, the measured graphic information and the measured color information 951 to a corresponding portion of the job graphic information and the job color specification of the reference electronic job file as the graphics and color information map 961. Step 1220 may include transforming the measured graphic information in the captured image to conform in perspective to the job graphic information. The method may also include in step 1220 comparing with the computer processor 903 the job graphic information to the measured graphic information, and if the comparison detects an anomalous area, ignoring the mapping in the anomalous area when defining the second print profile. Step 1220 may be performed using an image transformation algorithm technique to identify similarity matches between the measured graphic information and the job graphic information, and constructing a perspective transform matrix to map the measured graphic information to the job graphic information.

Additionally, in step 1225, the method includes determining, with the computer processor 103, a conversion algorithm for converting the job color specification to the measured color specification, based upon the mapping in step 1220. The conversion algorithm may utilize an image matching technique or image transformation algorithm such as SIFT, SURF, or ORBS. Alternatively, step 1225 may be performed using a look up table, or a neural network. Still further, in step 1230, the method includes defining, with the computer processor 903, a destination print profile 932 or destination printing job 912 for a destination printing system 905 based upon the conversion algorithm for converting the job color specification to the measured color specification and a known conversion algorithm for converting the measured color specification to the destination color specification. Yet further, in step 1235, the method includes printing with the destination printing system 905 a destination physical printed embodiment 942 of the electronic job file 913 using the destination printing profile 932 or destination printing job 912.

The interface for performing the methods as described may be, for example and without limitation, a touchscreen device where print job instructions are inputted via a user interface application through manipulation or gestures on a touch screen. For output purposes, the touch screen of the user interface and file intake includes a display screen, such as a liquid crystal display (LCD) or light emitting diode (LED) screen or the like. For input purposes, a touch screen includes a plurality of touch sensors.

In other embodiments, a keypad may be implemented in hardware as a physical keyboard of the user interface and file intake, and keys may correspond to hardware keys of such a keyboard. Alternatively, some or all of the keys (and keyboard) may be implemented as "soft keys" of a virtual keyboard graphically represented in an appropriate arrangement via touch screen. The soft keys presented on the touch screen may allow the user to invoke the same user interface functions as with the physical hardware keys. The user interface is not limited to any particular hardware and/or software for facilitating user input, however. The user interface and file intake may have a graphical interface, such as a screen, and tactile interfaces, like a keyboard or mouse. It may also have a command line interface that allows for text input commands. The user interface and file intake may also have a port to accept a connection from an electronic device containing a graphics file to be printed.

The instructions, programming, or application(s) may be software or firmware used to implement any other device functions associated with the source printer 802, computer processor 803, image capture device 804, or destination printer 905. Program aspects of the technology may be thought of as "products" or "articles of manufacture" typically in the form of executable code or process instructions and/or associated data that is stored on or embodied in a type of machine or processor readable medium (e.g., transitory or non-transitory), such as a memory of a computer used to download or otherwise install such programming into the source printer 802, computer processor 803, image capture device 904, or destination printer 905, or a transportable storage device or a communications medium for carrying program for installation in the source printer 802, computer processor 803, image capture device 904, or destination printer 905. Of course, other storage devices or configurations may be added to or substituted for those in the example. Such other storage devices may be implemented using any type of storage medium having computer or processor readable instructions or programming stored therein and may include, for example, any or all of the tangible memory of the computers, processors or the like, or associated modules.

The present disclosure particularly encompasses a computer-implemented method for replicating printing output of a source printer having an unknown color profile. The method includes receiving a source file of ink values used by the source printer for printing a product, obtaining measured values of the product in a device-independent color space (DICS), computing a source device-to-lab (A2B) function that converts the ink values in the source file to the measured values, and using a destination lab-to-device (B2A) function to convert the DICS values to destination printer ink values. Computing the A2B function may include a) estimating a proxy color profile, b) pre-training a source neural network using ink values from the source file and proxy color values, c) finetune-training the source neural network using the ink values from the source file and the measured values, and d) converting the ink values from the source file to the measured values using the finetune-trained source neural network.

### SUPPORTING HARDWARE

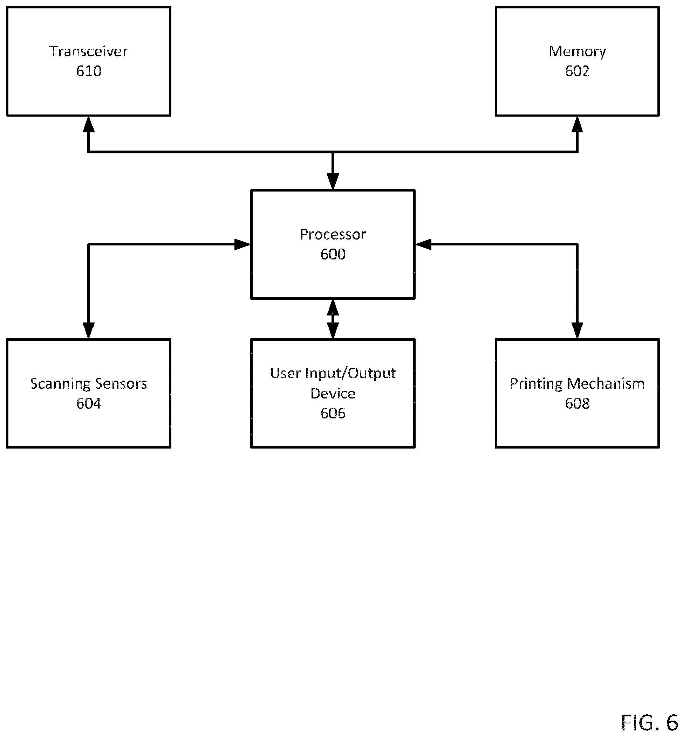

FIG. 6 is a block diagram of hardware components of the various devices. The PCs, printers and scanners described throughout the specification include at least one of the hardware components shown in FIG. 6. These hardware components include but are not limited to processor 600 (e.g. CPU) for performing the scanning algorithms, processing algorithms and printing algorithms, memory 602 for storing data and programming instructions for supporting the operation of processor 600, scanning sensors 604 (e.g. spectrometer) for scanning the physical sample, user input/output 606 (e.g. buttons, switches, display screens, etc.) for receiving instructions from the user and providing feedback to the user, printing mechanism 608 (e.g. proofer, inkjet printer, press printer, etc.) for printing the physical samples, and transceiver 610 (e.g. wired, wireless, Bluetooth, WiFi, etc.) for communication between the devices.

The instructions, programming, or application(s) may be software or firmware used to implement the device functions associated with the device such as the scanners, printers and PCs described throughout this description. Program aspects of the technology may be thought of as "products" or "articles of manufacture" typically in the form of executable code or process instructions and/or associated data that is stored on or embodied in a type of machine or processor readable medium (e.g., transitory or non-transitory), such as a memory of a computer used to download or otherwise install such programming into the source/destination PC and/or source/destination printer.

Of course, other storage devices or configurations may be added to or substituted for those in the example. Such other storage devices may be implemented using any type of storage medium having computer or processor readable instructions or programming stored therein and may include, for example, any or all of the tangible memory of the computers, processors or the like, or associated modules.

It should be understood that all of the figures as shown herein depict only certain elements of an exemplary system, and other systems and methods may also be used. Furthermore, even the exemplary systems may comprise additional components not expressly depicted or explained, as will be understood by those of skill in the art. Accordingly, some embodiments may include additional elements not depicted in the figures or discussed herein and/or may omit elements depicted and/or discussed that are not essential for that embodiment. In still other embodiments, elements with similar function may substitute for elements depicted and discussed herein.

Any of the steps or functionality of the system and method for converting graphic files for printing can be embodied in programming or one more applications as described previously. According to some embodiments, "function," "functions," "application," "applications," "instruction," "instructions," or "programming" are program(s) that execute functions defined in the programs. Various programming languages may be employed to create one or more of the applications, structured in a variety of manners, such as object-oriented programming languages (e.g., Objective-C, Java, or C++), procedural programming languages (e.g., C or assembly language), or firmware. In a specific example, a third party application (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating systems. In this example, the third party application can invoke API calls provided by the operating system to facilitate functionality described herein.

Hence, a machine-readable medium may take many forms of tangible storage medium. Non-volatile storage media include, for example, optical or magnetic disks, such as any of the storage devices in any computer(s) or the like, such as may be used to implement the client device, media gateway, transcoder, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The scope of protection is limited solely by the claims that now follow. That scope is intended and should be interpreted to be as broad as is consistent with the ordinary meaning of the language that is used in the claims when interpreted in light of this specification.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," "includes," "including," or any other variation thereof, are intended to cover a non-exclusive inclusion, such that a process, method, article, or apparatus that has, comprises or includes a list of elements or steps does not include only those elements or steps but may include other elements or steps not expressly listed or inherent to such process, method, article, or apparatus. An element preceded by "a" or "an" does not, without further constraints, preclude the existence of additional identical elements in the process, method, article, or apparatus that comprises the element.

Unless otherwise stated, any and all measurements, values, ratings, positions, magnitudes, sizes, and other specifications that are set forth in this specification, including in the claims that follow, are approximate, not exact. Such amounts are intended to have a reasonable range that is consistent with the functions to which they relate and with what is customary in the art to which they pertain. For example, unless expressly stated otherwise, a parameter value or the like, whether or not qualified by a term of degree (e.g. approximate, substantially or about), may vary by as much as ± 10% from the recited amount.

In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, the subject matter to be protected may lie in less than all features of any single disclosed example. Hence, the following claims are hereby incorporated into the Detailed Description, with each claim standing on its own as a separately claimed subject matter.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the true scope of the present concepts.

## Claims

1. A computer-implemented method for replicating printing output of a source printer (802) having an unknown color profile, the method comprising:
receiving a source file of ink values used by the source printer (802) to print a printed product;
measuring at least portions of the printed product to produce measured values of the printed product in a device-independent color space;
computing a source device-to-lab, A2B, function that converts the ink values in the source file to the measured values, and
using a destination lab-to-device, B2A, function to convert the values in the device-independent color space to ink values for a destination printer (905).

2. The computer-implemented method of claim 1, comprising generating the A2B function using a neural network.

3. The computer-implemented method of anyone of the preceding claims, wherein the step of computing the source device-to-lab, A2B, function that converts the ink values in the source file to the measured values, includes the steps of:
a) estimating a proxy color profile for the ink values,
b) pre-training a source neural network using the ink values from the source file and proxy color values from the proxy color profile,
c) finetune-training the source neural network using the ink values from the source file and the measured values, and
d) converting the ink values from the source file to the measured values using the finetune-trained source neural network.

4. The computer-implemented method of claim 3, further comprising:
estimating the proxy color profile by converting the ink values in the source file to the device-independent color space.

5. The computer-implemented method of claim 3 or claim 4, further comprising:
pre-training the source neural network by:
inputting the ink values from the source file to the source neural network,
comparing an estimated output of the source neural network to the proxy color values from the proxy color profile, and
adjusting the source A2B neural network based on the comparison.

6. The computer-implemented method of any one of claims 3-5, further comprising:
finetune-training the source neural network by:
inputting the ink values from the source file to the source neural network,
comparing an estimated output of the source neural network to the measured values, and
adjusting the source A2B neural network based on the comparison.

7. The computer-implemented method of any one of claims 1-6, wherein the destination, B2A, function is predetermined based on a known destination printer profile.

8. The computer-implemented method of any one of claims 1-6, further comprising:
estimating the destination, B2A, function by training a destination B2A neural network using device-independent color space values and a predetermined destination A2B function by:
estimating ink values based on device-independent color space values input to the destination B2A network,
inputting the estimated ink values to the predetermined destination A2B function which outputs device-independent color space values,
comparing the device-independent color space values output by the predetermined destination A2B function with the device-independent color space values input to the destination B2A network, and
adjusting the destination B2A neural network based on the comparison.

9. The computer-implemented method of any one of the foregoing claims, comprising generating the A2B function using a trainable theoretical overprint model.

10. The computer-implemented method of claim 9, wherein the trainable theoretical overprint model defining a plurality of inks having a plurality of weight values with weight value ranges, the weight values corresponding to a plurality of wavelength responses and a plurality of curve parameters, one for each wavelength.

11. The computer-implemented method of any one of the foregoing claims, wherein the device-independent color space is L*a*b* or sRGB.

12. The computer-implemented method of any one of the foregoing claims, wherein the source file comprises a PDF.

13. The computer-implemented method of any one of the foregoing claims, wherein measuring the portions of the printed product comprises measuring selected locations at selected coordinates on the printed product with a colorimeter.

14. The computer-implemented method of claim 13, wherein the selected locations define scattered points or groups of points, or a line across the printed product or wherein the selected locations are based upon ink values in the source file.

15. A computer program product, in particular embodied as machine readable medium, comprising computer-readable instructions which, when loaded and executed on a suitable system perform the steps of a method of any one of the foregoing claims.

## Patentansprüche

1. Ein computerimplementiertes Verfahren zum Replizieren der Druckausgabe eines Quelldruckers (802) mit einem unbekannten Farbprofil, wobei das Verfahren Folgendes umfasst:
Empfangen einer Quelldatei von Tintenwerten, die vom Quelldrucker (802) zum Drucken eines Druckprodukts verwendet werden;
Messen zumindest von Abschnitten des Druckprodukts, um Messwerte des Druckprodukts in einem geräteunabhängigen Farbraum zu erzeugen;
Berechnen einer Quellgerät-zu-Lab- (*source-device-to-lab* - A2B) - Funktion, die die Tintenwerte in der Quelldatei in die Messwerte umwandelt, und
Verwenden einer Ziel-Lab-zu-Gerät- (*destination-lab-to-device* - B2A) - Funktion, um die Werte im geräteunabhängigen Farbraum in Tintenwerte für einen Zieldrucker (905) umzuwandeln.

2. Das computerimplementierte Verfahren nach Anspruch 1, umfassend das Erzeugen der A2B-Funktion unter Verwendung eines neuronalen Netzes.

3. Das computerimplementierte Verfahren nach irgendeinem der vorstehenden Ansprüche, wobei der Schritt des Berechnens der Quellgerät-zu-Lab-Funktion (A2B), die die Tintenwerte in der Quelldatei in die Messwerte umwandelt, die folgenden Schritte beinhaltet:
a) Schätzen eines Proxy-Farbprofils für die Tintenwerte,
b) Vortrainieren eines Quell-neuronalen Netzes unter Verwendung der Tintenwerte aus der Quelldatei und der Proxy-Farbwerte aus dem Proxy-Farbprofil,
c) Feinabstimmungstrainieren des Quell-neuronalen Netzes unter Verwendung der Tintenwerte aus der Quelldatei und der Messwerte, und
d) Umwandeln der Tintenwerte aus der Quelldatei in die Messwerte unter Verwendung des feinabstimmungstrainierten Quell-neuronalen Netzes.

4. Das computerimplementierte Verfahren nach Anspruch 3, ferner umfassend:
Schätzen des Proxy-Farbprofils durch Konvertieren der Tintenwerte in der Quelldatei in den geräteunabhängigen Farbraum.

5. Das computerimplementierte Verfahren nach Anspruch 3 oder Anspruch 4, ferner umfassend: das Vortrainieren des Quell-neuronalen Netzes durch:
Eingeben der Tintenwerte aus der Quelldatei in das Quell-neuronales Netz,
Vergleichen einer geschätzten Ausgabe des Quell-neuronalen Netzes mit den Proxy-Farbwerten aus dem Proxy-Farbprofil, und
Anpassen des Quell-A2B-neuronalen Netzes auf der Grundlage des Vergleichs.

6. Das computerimplementierte Verfahren nach irgendeinem der Ansprüche von 3 bis 5, ferner umfassend:
das Feinabstimmungstrainieren des Quell-neuronalen Netzes durch:
Eingeben der Tintenwerte aus der Quelldatei in das Quellneuronale Netz,
Vergleichen einer geschätzten Ausgabe des Quell-neuronalen Netzes mit den Messwerten, und
Anpassen des Quell-A2B-neuronalen Netzes auf der Grundlage des Vergleichs.

7. Das computerimplementierte Verfahren nach irgendeinem der Ansprüche von 1 bis 6, wobei die Ziel-B2A-Funktion auf der Grundlage eines bekannten Ziel-Druckerprofils vorbestimmt ist.

8. Das computerimplementierte Verfahren nach irgendeinem der Ansprüche von 1 bis 6, ferner umfassend:
Schätzen der Ziel-B2A-Funktion durch Trainieren eines Ziel-B2A-neuronalen Netzes unter Verwendung geräteunabhängiger Farbraumwerte und einer vorbestimmten Ziel-A2B-Funktion, durch:
Schätzen von Tintenwerten auf der Grundlage geräteunabhängiger Farbraumwerte, die in das Ziel-B2A-neuronale Netz eingegeben werden,
Eingeben der geschätzten Tintenwerte in die vorbestimmte Ziel-A2B-Funktion, die geräteunabhängige Farbraumwerte ausgibt,
Vergleichen der von der vorbestimmten Ziel-A2B-Funktion ausgegebenen geräteunabhängigen Farbraumwerte mit den in das Ziel-B2A-neuronale Netz eingegebenen geräteunabhängigen Farbraumwerten, und
Anpassen des Ziel-B2A-neuronalen Netzes auf der Grundlage des Vergleichs.

9. Das computerimplementierte Verfahren nach irgendeinem der Ansprüche, umfassend das Erzeugen der A2B-Funktion unter Verwendung eines trainierbaren theoretischen Überdruckmodells.

10. Das computerimplementierte Verfahren nach Anspruch 9, wobei das trainierbare theoretische Überdruckmodell eine Vielzahl von Tinten definiert, die eine Vielzahl von Gewichtswerten mit Gewichtswertbereichen aufweisen, wobei die Gewichtswerte einer Vielzahl von Wellenlängenantworten und einer Vielzahl von Kurvenparametern entsprechen, jeweils einer für jede Wellenlänge.

11. Das computerimplementierte Verfahren nach irgendeinem der vorstehenden Ansprüche, wobei der geräteunabhängige Farbraum L*a*b* oder sRGB ist.

12. Das computerimplementierte Verfahren nach irgendeinem der vorstehenden Ansprüche, wobei die Quelldatei eine PDF-Datei umfasst.

13. Das computerimplementierte Verfahren nach irgendeinem der Ansprüche von 1 bis 12, wobei das Messen der Abschnitte des Druckprodukts das Messen ausgewählter Stellen an ausgewählten Koordinaten auf dem Druckerzeugnis mit einem Kolorimeter umfasst.

14. Das computerimplementierte Verfahren nach Anspruch 13, wobei die ausgewählten Stellen verstreute Punkte oder Gruppen von Punkten oder eine Linie über das Druckprodukt hinweg definieren, oder wobei die ausgewählten Stellen auf Tintenwerten in der Quelldatei basieren.

15. Ein Computerprogrammprodukt, insbesondere in Form eines maschinenlesbaren Mediums, das computerlesbare Anweisungen umfasst, die, wenn sie auf ein geeignetes System geladen und dort ausgeführt werden, die Schritte eines Verfahrens nach irgendeinem der vorstehenden Ansprüche ausführen.

## Revendications

1. Un procédé mis en œuvre par ordinateur destiné à répliquer une sortie d'impression d'une imprimante source (802) présentant un profil colorimétrique inconnu, le procédé comprenant :
la réception d'un fichier source de valeurs d'encre utilisées par l'imprimante source (802) pour imprimer un produit imprimé ;
la mesure d'au moins des parties du produit imprimé afin de produire des valeurs mesurées du produit imprimé dans un espace colorimétrique indépendant du dispositif ;
le calcul d'une fonction source dispositif-vers-lab (A2B) qui convertit les valeurs d'encre du fichier source en valeurs mesurées, et
l'utilisation d'une fonction destination lab-vers-dispositif (B2A) pour convertir les valeurs dans l'espace colorimétrique indépendant du dispositif en valeurs d'encre pour une imprimante destination (905).

2. Le procédé mis en œuvre par ordinateur d'après la revendication 1, comprenant la génération de la fonction A2B à l'aide d'un réseau neuronal.

3. Le procédé mis en œuvre par ordinateur d'après l'une quelconque des revendications précédentes, sachant que l'étape consistant à calculer la fonction source dispositif-vers-lab (A2B), qui convertit les valeurs d'encre du fichier source en valeurs mesurées, inclut les étapes suivantes :
a) l'estimation d'un profil colorimétrique proxy pour les valeurs d'encre,
b) le pré-entraînement d'un réseau neuronal source à l'aide des valeurs d'encre issues du fichier source et des valeurs de couleur proxy issues du profil colorimétrique proxy,
c) l'entraînement par réglage fin du réseau neuronal source à l'aide des valeurs d'encre issues du fichier source et des valeurs mesurées, et
d) la conversion des valeurs d'encre issues du fichier source en valeurs mesurées à l'aide du réseau neuronal source ayant fait l'objet de l'entraînement par réglage fin.

4. Le procédé mis en œuvre par ordinateur d'après la revendication 3, comprenant en outre :
l'estimation du profil colorimétrique proxy par conversion des valeurs d'encre du fichier source dans l'espace colorimétrique indépendant du dispositif.

5. Le procédé mis en œuvre par ordinateur d'après la revendication 3 ou la revendication 4, comprenant en outre :
le pré-entraînement du réseau neuronal source par :
l'entrée des valeurs d'encre issues du fichier source dans le réseau neuronal source,
la comparaison d'une sortie estimée du réseau neuronal source aux valeurs de couleur proxy issues du profil colorimétrique proxy, et par
l'ajustement du réseau neuronal A2B source sur la base de la comparaison.

6. Le procédé mis en œuvre par ordinateur d'après l'une quelconque des revendications de 3 à 5, comprenant en outre :
l'entraînement par réglage fin du réseau neuronal source par :
l'entrée des valeurs d'encre issues du fichier source dans le réseau neuronal source,
la comparaison d'une sortie estimée du réseau neuronal source aux valeurs mesurées, et
l'ajustement du réseau neuronal A2B source sur la base de la comparaison.

7. Le procédé mis en œuvre par ordinateur d'après l'une quelconque des revendications de 1 à 6, sachant que la fonction destination B2A est prédéterminée sur la base d'un profil d'imprimante destination connu.

8. Le procédé mis en œuvre par ordinateur d'après l'une quelconque des revendications de 1 à 6, comprenant en outre :
l'estimation de la fonction destination B2A par entraînement d'un réseau neuronal destination B2A à l'aide de valeurs dans l'espace colorimétrique indépendant du dispositif et d'une fonction destination A2B prédéterminée, par :
l'estimation de valeurs d'encre sur la base de valeurs dans l'espace colorimétrique indépendant du dispositif entrées dans le réseau destination B2A,
l'entrée des valeurs d'encre estimées dans la fonction destination A2B prédéterminée qui délivre des valeurs dans l'espace colorimétrique indépendant du dispositif,
la comparaison des valeurs dans l'espace colorimétrique indépendant du dispositif délivrées par la fonction destination A2B prédéterminée avec les valeurs dans l'espace colorimétrique indépendant du dispositif entrées dans le réseau destination B2A, et
l'ajustement du réseau neuronal destination B2A sur la base de la comparaison.

9. Le procédé mis en œuvre par ordinateur d'après l'une quelconque des revendications précédentes, comprenant la génération de la fonction A2B à l'aide d'un modèle théorique en surimpression entraînable.

10. Le procédé mis en œuvre par ordinateur d'après la revendication 9, sachant que le modèle théorique en surimpression entraînable définit une pluralité d'encres présentant une pluralité de valeurs de poids avec des plages de valeurs de poids, les valeurs de poids correspondant à une pluralité de réponses en longueur d'onde et à une pluralité de paramètres de courbe, un pour chaque longueur d'onde.

11. Le procédé mis en œuvre par ordinateur d'après l'une quelconque des revendications précédentes, sachant que l'espace colorimétrique indépendant du dispositif est L*a*b* ou sRGB.

12. Le procédé mis en œuvre par ordinateur d'après l'une quelconque des revendications précédentes, sachant que le fichier source comprend un PDF.

13. Le procédé mis en œuvre par ordinateur d'après l'une quelconque des revendications précédentes, sachant que la mesure des parties du produit imprimé comprend la mesure d'emplacements sélectionnés à des coordonnées sélectionnées sur le produit imprimé à l'aide d'un colorimètre.

14. Le procédé mis en œuvre par ordinateur d'après la revendication 13, sachant que les emplacements sélectionnés définissent des points dispersés ou des groupes de points, ou une ligne traversant le produit imprimé, ou sachant que les emplacements sélectionnés sont basés sur des valeurs d'encre dans le fichier source.

15. Un produit-programme informatique, notamment sous la forme d'un support lisible par machine, comprenant des instructions lisibles par ordinateur qui, lorsqu'elles sont chargées et exécutées sur un système approprié, exécutent les étapes d'un procédé d'après l'une quelconque des revendications précédentes.
